Europäisches Patentamt

(19) European Patent Office

Office européen des brevets

(11) Veröffentlichungsnummer: **0 028 399**
**A2**

(12) **EUROPÄISCHE PATENTANMELDUNG**

(21) Anmeldenummer: **80106665.5**

(51) Int. Cl.³: **G 01 F 23/26**

(22) Anmeldetag: **30.10.80**

(30) Priorität: **03.11.79 DE 2944512**

(43) Veröffentlichungstag der Anmeldung:
**13.05.81 Patentblatt 81/19**

(84) Benannte Vertragsstaaten:
**AT BE CH DE FR GB IT LI NL**

(71) Anmelder: **Pelikan Aktiengesellschaft**
**Podbielskistrasse 141**
**D-3000 Hannover 1(DE)**

(72) Erfinder: **Camen, Dieter**
**Füllenfeldstrasse 1**
**D-3004 Isernhagen 1(DE)**

(72) Erfinder: **Ulrich, Günter, Dipl.-Phys.**
**Voltastrasse 4**
**D-3000 Hannover 1(DE)**

(72) Erfinder: **Kupferschmidt, Wolfgang**
**Im Lönswinkel 18**
**D-3002 Wedemark 15(DE)**

(74) Vertreter: **Eikenberg, Kurt-Rudolf, Dr.**
**Dipl.-Chem. et al,**
**Patentanwälte Eikenberg & Brümmerstedt**
**Schackstrasse 1**
**D-3000 Hannover 1(DE)**

(54) Flüssigkeitsanzeiger für Tintenbehälter.

(57) Um den Benutzer eines Schreibgerätes, bei welchem als Schreibflüssigkeit Tinte oder dergl. verwendet wird, darauf aufmerksam zu machen, daß der Tintenvorrat in den Tintenbehälter (1, 22) zur Neige geht, ist vorgesehen, bei Erreichen eines vorbestimmten minimalen Wertes ein optisches und-/oder akustisches Signal zu erzeugen. Zu diesem Zweck ist ein Schwingkreis (2, 4, 6) vorgesehen, dessen Kapazität durch zwei Kondensatorplatten (2, 24, 25) gebildet wird, zwischen denen sich der Tintenbehälter (1, 22) befindet. Die Tinte wirkt damit als Dielektrikum, dessen Wert sich mit geringer werdendem Tintenvorrat ändert, und als Folge davon ändert sich auch die Kapazität des Schwingkreises (2, 4, 6). Dieser ist so bemessen, daß seine Resonanzfrequenz, und damit die maximale Spannung an seinem Widerstand (6) dan erreicht wird, wenn der Tintenvorrat auf einen vorbestimmten Wert abgesunken ist. Bei Erreichen dieser maximalen Spannung wird eine Signalschaltung aktiviert, welches ein akustisches und- oder optisches Signal abgibt.

FIG.1

## Flüssigkeitsanzeiger für Tintenbehälter

Die Erfindung betrifft einen Flüssigkeitsanzeiger für Tintenbehälter. Ein solcher Flüssigkeitsanzeiger kann den Gebrauch eines Schreibgerätes, welches Tinte verwendet, wesentlich erleichtern, weil dem Benutzer angezeigt werden kann, wieviel Vorrat an Tinte ihm noch zur Verfügung steht. In der Praxis ist es dabei vor allem wichtig und auch völlig ausreichend, den Benutzer rechtzeitig darauf aufmerksam zu machen, wenn der Tintenvorrat in dem Tintenbehälter des Schreibgerätes zu Ende geht. Derartiges war bisher bei Schreibgeräten nicht üblich, was insbesondere bei den sogenannten Tintenstrahlschreibern als nachteilig empfunden wurde. Aber auch für Füllfederhalter mit Tintenpatronen gilt dieser Nachteil, denn um den in dem jeweiligen Tintenbehälter befindlichen Tintenvorrat kontrollieren zu können, mußte das Schreibgerät immer erst geöffnet werden.

Durch die DE-PS 22 55 495 ist es schon bekannt, elektronische Meßvorrichtungen an Füllhaltern zu verwenden. Allerdings wird mit dieser bekannten Meßvorrichtung ausschließlich der Zweck verfolgt, eine geregelte Tintenzufuhr aus dem Tintenvorratsbehälter zur Schreibspitze des Schreibgerätes zu gewährleisten. Demgegenüber liegt der vorliegenden Erfindung die Aufgabe zugrunde, den zu Ende gehenden Tintenvorrat in einem Schreibgerät von außen her beobachten und kontrollieren zu können, ohne das Schreibgerät selbst öffnen zu müssen.

Die Lösung dieser Aufgabe erfolgt dadurch, daß der Flüssigkeitsanzeiger bei Absinken der Tintenmenge in dem Tintenbehälter auf einen vorbestimmten minimalen Wert ein optisches und/oder akustisches Signal erzeugt.

Der grundlegende Gedanke der Erfindung besteht also darin, den Benutzer des Schreibgerätes rechtzeitig durch ein Signal darauf aufmerksam zu machen, daß der Tintenvorrat demnächst zu Ende geht. Es kann also rechtzeitig dafür Sorge getragen werden, den Tintenvorrat aufzufüllen, bzw. den Tintenbehälter selbst zu erneuern. Dadurch lassen sich insbesondere bei Tintenstrahlschreibern störende Unterbrechungen vermeiden. Beim Unterschreiten eines vorbestimmten minimalen Wertes - z.B. 20 % des Gesamtvorrates - macht das Signal den Benutzer darauf aufmerksam, daß der Tintenvorrat demnächst zu Ende geht.

In vorteilhafter Weiterbildung der Erfindung umfaßt der Flüssigkeitsanzeiger einen kapazitiven Meßwertaufnehmer, und dieser läßt sich in zweckmäßiger Weise durch zwei an den Außenseiten des Tintenbehälters gegenüberliegend angeordneten Kondensatorplatten bilden. Der kapazitive Meßwertaufnehmer ist Bestandteil eines Serienschwingkreises, der daneben noch einen Widerstand erhält, dessen Spannung zur Erzeugung des erwähnten Signals in einer Signalschaltung herangezogen ist.

Die Verwendung eines kapazitiven Meßwertaufnehmers ermöglicht es, die mit der Erfindung angestrebte Wirkung auf einfache Weise zu erreichen. Die zwischen den Kondensatorplatten des kapazitiven Meßwertaufnehmers befindliche Tintenflüssigkeit wirkt wie ein Dielektrikum, d.h., mit zunehmender Entleerung des Tintenbehälters ändert sich der Wert der Kapazität, womit sich auch die elektrischen Werte des Schwingkreises verändern. Dieser kann in vorteilhafter Weise von einem Frequenzgenerator gespeist werden, und durch entsprechende Dimensionierung der Schwingkreiswerte läßt sich erreichen, daß seine Resonanzfrequenz dann auftritt, wenn der Tintenvorrat bis auf die oben erwähnten 20 % abgesunken ist, wenn also die Kapazität einen dadurch festgelegten ganz bestimmten Wert angenommen hat. Bei Erreichen dieser Resonanzfrequenz weist die Spannung an dem Widerstand des Schwingkreises ein Maximum auf, und diese maximale Spannung läßt sich dazu verwenden, ein optisches oder auch ein akustisches Signal zur Tintenstandsanzeige zu erzeugen.

Anhand der in der Zeichnung dargestellten Ausführungsbeispiele wird die Erfindung nachfolgend näher erläutert. Es zeigen:

Fig. 1    das Prinzipschaltbild eines Serienschwingkreises, dessen Kapazität durch einen kapazitiven Meßwertaufnehmer gebildet ist,

Fig. 2    die Anordnung eines Flüssigkeitsanzeigers in einem Füllfederhalter,

Fig.3 u.4 eine Prinzipdarstellen eines kapazitiven Meßwertaufnehmers bei einer Kassette eines Tintenstrahlschreibers, und

Fig. 5    die graphische Darstellung unterschiedlicher Resonanzfrequenzen bei unterschiedlichem Entleerungsgrad eines als Dielektrikum wirkenden Tintenbehälters.

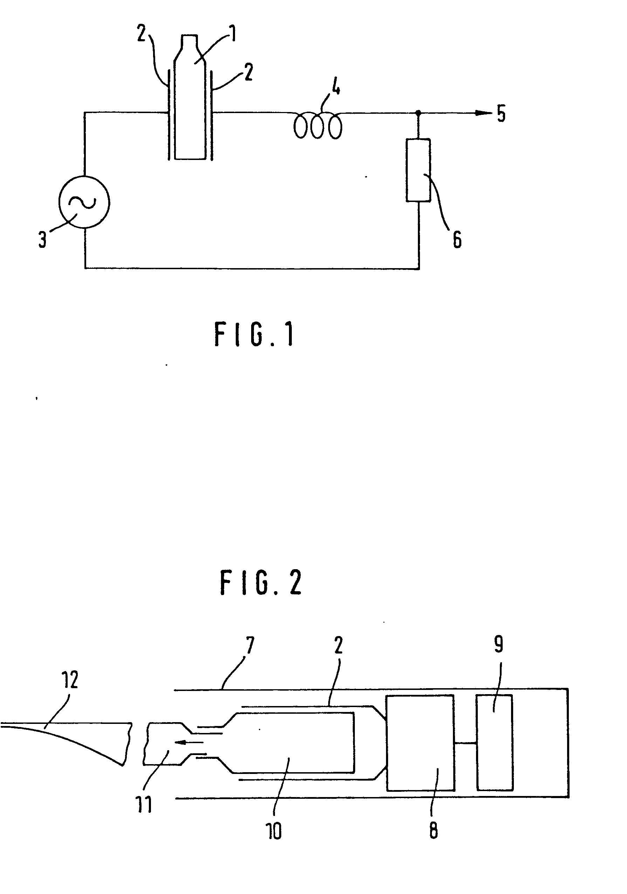

In der Prinzipdarstellung gemäß Fig. 1 befindet sich ein Tintenbehälter 1 zwischen zwei Kondensatorplatten 2 in einem in Serie geschalteten Schwingkreis, der eine Spule 4, einen Widerstand 6 und einen Frequenzgenerator 3 zur Erzeugung einer Wechselspannung umfaßt. Durch den Pfeil 5 ist angedeutet, daß dort eine Verbindung zu einer im einzelnen nicht dargestellten Signalschaltung hergestellt ist, die bei Erreichen einer maximalen Spannung an dem Widerstand 6 ein akustisches und/oder optisches Signal erzeugt.

In der Darstellung gemäß Fig. 2 ist die Verwirklichung eines Flüssigkeitsanzeigers bei einem Füllfederhalter mit einem Tintenvorratsbehälter 10 in Form einer Tintenpatrone gezeigt. Die Kondensatorplatten 2 sind im hohlen Halterschaft 7 untergebracht und stehen mit einer Schaltungseinheit 8 in Verbindung, welche die hier nicht näher gezeigten Elemente zur Bildung des erwähnten Serienschwingkreises enthält. Über eine ebenfalls im Halterschaft des Füllfederhalters untergebrachte Batterie 9 wird die erforderliche Energie zugeführt. Der Tintenvorratsbehälter 10 in Gestalt einer Tintenpatrone steht in an sich bekannter Weise über ein Tintenleitsystem 11 mit einer Schaftspitze 12 in Verbindung.

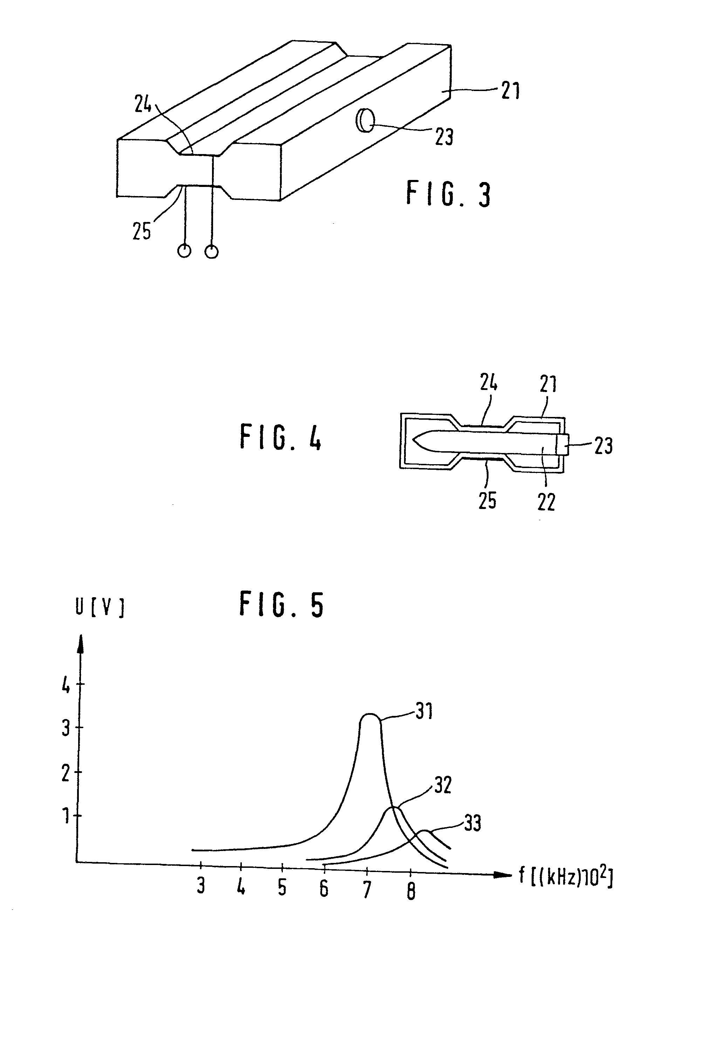

In den Prinzipdarstellungen gemäß Fig. 3 u. 4 ist die Anwendung eines Flüssigkeitsanzeiger mit kapazitivem Meßwertaufnehmer bei einem Tintenstrahlschreiber mit einer Tintenkassette 21 verdeutlicht. Diese nimmt in ihrem Hohlraum den Tintenvorratsbehälter 22 auf, der über seine gesamte Länge von den Kondensatorplatten 24 und 25 abgedeckt ist. Die Tintenaufnahme erfolgt hier über den perforierbaren Verschluß 23 in bekannter und deshalb hier nicht mehr erläuterter Weise. Die Kondensatorplatten 24 und 25 sind hier eben ausgebildet, während die Kondensatorplatten 2 gemäß Fig. 2 den Tintenvorratsbehälter 10 in Form der Tintenpatrone halbschalenförmig umfassen.

Zur Erläuterung des Prinzips des erfindungsgemäßen Flüssigkeitsanzeigers sei auf Fig. 5 verwiesen, in welcher unterschiedliche Resonanzkurven des Serienschwingkreises bei verschiedenen Werten der Kapazität des kapazitiven Meßwertaufnehmers dargestellt sind. Bei vollem Tintenvorratsbehälter 10 bzw. 22 beträgt das Maximum 31 der Spannung an dem Widerstand 6 ca. 4 V, während bei leerem Tintenvorratsbehälter 10 bzw. 22 die maximale Spannung 33 nur noch 1 V beträgt. Bei einem zur Hälfte geleerten Tintenvorratsbehälter beträgt die maximale Spannung 32 ca. 1,5 V. Durch Wahl der Schwingkreiselemente läßt sich nun auf einfache Weise eine Resonanzkurve realisieren, die an dem Widerstand 6 eine maximale Spannung abgibt, wenn der Tintenvorrat in dem Tintenbehälter 10 bzw. 22 auf einen vorbestimmten Wert - z.B. 20 % - abgesunken ist.

Wenn diese maximale Spannung erreicht wird, wird die schon erwähnte Signalschaltung aktiviert, welche dann wahlweise ein akustisches oder optisches Signal erzeugt. Selbstverständlich kann die Signalschaltung auch gleichzeitig sowohl ein akustisches als auch optisches Signal bewirken.

In den gezeigten Ausführungsbeispielen wurde für den Flüssigkeitsanzeiger ein Serienschwingkreis verwendet. Die angestrebte Wirkung läßt sich aber auch mit einem Parallelschwingkreis erzielen, dessen Kapazität durch den kapazitiven Meßwertaufnehmer gebildet ist. Der Serienschwingkreis ist allerdings als vorteilhafter anzusehen, weil sich damit der Einfluß einer Benetzung der Wand des Tintenbehälters 10 bzw. 22 auf die Messung sehr viel besser ausschalten läßt.

P a t e n t a n s p r ü c h e

1. Flüssigkeitsanzeiger für Tintenbehälter, dadurch gekennzeichnet, daß der Flüssigkeitsanzeiger bei Absinken der Tintenmenge in dem Tintenbehälter (10, 22) auf einen vorbestimmten minimalen Wert ein optisches und/oder akustisches Signal erzeugt.

2. Flüssigkeitsanzeiger nach Anspruch 1, dadurch gekennzeichnet, daß er einen kapazitiven Meßwertaufnehmer (2, 24, 25) enthält.

3. . Flüssigkeitsanzeiger nach Anspruch 2, dadurch gekennzeichnet, daß der kapazitive Meßwertaufnehmer durch zwei an den Außenseiten des Tintenbehälters (10,22) gegenüberliegend angeordnete Kondensatorplatten (2, 24, 25) gebildet ist.

4. Flüssigkeitsanzeiger nach Anspruch 3, dadurch gekennzeichnet, daß der kapazitive Meßwertaufnehmer (2, 24, 25) Bestandteil eines Serienschwingkreises (2, 4, 6) ist, der einen Widerstand (6) enthält, dessen Spannung zur Erzeugung des optischen und/oder akustischen Signals in einer Signalschaltung (8) herangezogen ist.

5. Flüssigkeitsanzeiger nach Anspruch 4, dadurch gekennzeichnet, daß der Serienschwingkreis (2, 4,6) von einem Frequenzgenerator (3) gespeist ist.

FIG.1

FIG.2

FIG. 3

FIG. 4

FIG. 5